# EUROPEAN PATENT APPLICATION

(11) **EP 2 944 286 A2**
(43) Date of publication of application: **18.11.2015**
(21) Application number: 15167273.0
(22) Date of filing: 12.05.2015
(51) Int. Cl.: A61C 8/00, A61C 3/00

(54) **OSTEOTOME FOR DENTAL MEDICINE WITH VARIABLE ANGULATION OF THE ACTIVE TIP**

(30) Priority: 15.05.2014 PT 14107639
(71) Applicant: Medical Art Center, 4150-409 Porto (PT)
(72) Inventor: Pereira Dias do Espirito Santo, João, Pedro, 4150 Porto (PT); Bernardes Ferreira Mateus, Ana, Catarina, 3840-344 Sosa (PT); Gil Duarte Morais, Paulo, Jorge, 2955-003 Pinhal Novo (PT); Almeida Silva, Marina, Alexandra, 4405-736 Madalena (PT)
(74) Representative: Lourenço Martinho do Rosário, Ana Margarida

(57) **Abstract**

The present invention relates to a surgical instrument for dental medicine designated osteotome and which is intended for lifting the maxillary sinus, whose main characteristic is the variable angulation of its active tips. The osteotome consists of an angulation head (3), body (1), stem-brake (2) and active tips (4).

## Description

### Scope of the Invention

The present invention relates to a surgical instrument for dental medicine designated osteotome and which is intended for lifting the maxillary sinus, whose main characteristic is the variable angulation of its active tips. The osteotome consists of an angulation head, body, stem-brake and active tips.

### State of the Art

Dentistry is a constantly evolving area, having the last quarter of the twentieth century seen its separation into several fields of expertise. The osseointegration and implant dentistry become historical landmarks in this revolution.

With the appearance of new techniques and of the biomaterials there is the possibility of replacing the natural teeth with artificial implant-supported fixed devices that, for the first time, last between 10 and 15 years, in particular providing an improved aesthetic and functional quality of life. The prosthetic oral rehabilitation of edentulous patients has become a reliable and durable therapeutic option. A new chapter in the oral rehabilitation of edentulous patients has, thus, been opened and there is still the belief that future scientific advances in this area can bring about new benefits.

The implantology is presented with a new scientific support disclosed by *Bränemark* at a conference at the University of Toronto in May 1982. The scientific rigor of the presented studies had, as a result, new synergies among the disciplines of surgery and prosthesis. Since then, its technique has been widely used worldwide. The validation by the scientific community of this new technique was a long process. This was the first bibliographical reference of the principles which determine its concept, published internationally in 1982, accepted as "osseointegration" and defined as the direct connection between the bone and the implant surface.

The concept of osseointegration evolved in order to consider that there was a direct contact of a newly formed bone structurally similar to the normal and the surface of an implant in pure titanium, without any change of soft tissue, encapsulation or rejection.

Another important advance in oral implantology was the maxillary sinus lifting technique. The elevation of the maxillary sinus is a breakthrough in dental treatments, and an excellent option in the rehabilitation of edentulous posterior jawbone with bone failure. With the loss of the tooth, the stimuli which maintain the alveolar bone disappear and this one enters into a degenerative process. First, it causes the narrowing of the width of the bone crest and consequently, the decrease in trabecular bone. This process results in the decrease of bone volume. The resorption caused by early extraction occurs with greater intensity in the posterior regions of the jaw bones. After the extraction of a tooth, the buccal wall undergoes more rapid involution than the palatine wall. In the front maxillary area, the thickness of the crest decreases from 40% to 60% in the first three years after tooth loss. Five years later, the planned resorption of the thickness of the alveolar crest is 3 mm, taking the form of a knife blade. The rehabilitation technique to be used depends on the amount of remaining bone, its structure, density, as well as on an adequate knowledge of all techniques in order to enable the combined application of various methods.

*Tatum,* in 1975, introduced a technique that enables to increase bone thickness in the maxillary sinus floor when there is bone failure. This author calls for the need to modify the maxillary sinus placing autologous bone as graft material in the floor beneath the Schneider membrane. This procedure initially termed sinus floor elevation, has been described as being performed in two stages, with a healing phase lasting from 4 to 6 months to allow for the biological integration of the bone graft.

The elevation of the maxillary sinus is basically a technique in which one can, by raising the *Schneider membrane*, place implants up to 12 mm in vertical height.

From the corresponding technique it is important to consider that:
- It is the thickness of the wall which determines the nature of the event concerned;
- It is through the use of appropriate instruments (osteotomes) which that one seeks a non-traumatic interaction (preservation of *the Schneider membrane*);
- It is necessary that the implant surface be biocompatible;
- There must be a margin, with a minimum of 2 mm between the implant and the adjacent tooth;
- It is necessary to apply a biomaterial or the bone itself to achieve the increase in the elevation of the membrane;
- In this process, there should not be immediate loading.

The use of the mentioned surgical instruments enables the achievement of the main objectives in relation to bone reconstruction at the back of the jaw, in particular, the reconstruction of the bone tissue in its form, position and acceptable amount, providing oral rehabilitation with dental implants. In the cases that have insufficient bone, these surgical instruments are also used as part of the least invasive technique for obtaining a small elevation located in the maxillary sinus by the transcrestal access. These techniques often include the increase of the local receptor, using a variety of materials and accesses, particularly the lateral access technique in which the implants can be placed in areas previously considered unsuitable due to the insufficient bone density. Among the various implant placement techniques, there is the technique for atraumatic elevation of the maxillary sinus *of Summers,* as it is a current reference, with the use of several surgical instruments and osteotomes, technique that is described below.

In oral rehabilitation through the use of osseointegrated implants in the posterior jawbone region, several procedures have been proposed in order to increase the post-surgical success and avoid nuisance / discomfort to the (total or partial) edentulous patient. Thus, with the evolution that derives from of science and technology, the technique of the sinus elevation has undergone various changes over time.

The proximity of the alveolar ridge crest to the maxillary sinus floor results in an obstacle to the rehabilitation of the severely resorbed jaw, therefore, considering that the respective zone requires sufficient bone quantity to ensure the stability of the implant, it is often necessary to perform prior surgeries with bone grafts.

This was first conceived in 1975 by *Tatum,* when he increased the height of the wall of the maxillary sinus by introducing bone graft material under Schneider membrane through the side wall of the alveolus (traumatic technique) or the rim crest (atraumatic technique). In what concerns the access through the ridge, a variety of instruments including drills, expanders and surgical instruments such as osteotomes were used. The bone was removed with the aid of instruments such as curettes until the sinus floor was exposed. The floor was then broken with an osteotome of small arms and high sinus membrane. Then, the graft was placed in the cavity with the aid of special curettes, and if there was enough residual bone volume for primary stabilization of the implant, this was immediately inserted.

On the other hand, in 1994 *Summers* developed a less invasive and more simplified osteotomy method for the lifting of the maxillary sinus - where the bone is not removed - and at the same time conceived specifically designed instruments for the application of the technique: surgical instruments *-osteotomes of Summers* and the osteotomes modified for very fine ridges.

For a better understanding of the performance inherent to the technique of atraumatic elevation of the maxillary sinus (described by *Summers*), we are summarizing hereunder its advantages and disadvantages.

Advantages:
- There is no heating / necrosis of the bone;
- Preservation of bone structure;
- Simplified technique;
- Implant is on irrigated bone and not on the graft;
- Dehiscence of the suture does not compromise implant;
- Long-term results.

Disadvantages:
- Use only in the jaw;
- Weakened cortical bone;
- Lower primary stability of the implant;
- Mouth opening limitation;
- Existing instruments unable ergonomic adaptation to the patient.

Moreover, particularly during the clinical act and particularly during the performance of the surgical technique, as well as the oral rehabilitation treatments, surgical instruments are used, in addition to the active tips for the lifting of the maxillary sinus, the other tips (mirrors, curettes, spatulas, etc.) that being fixed instruments do not allow the easy access to restricted areas.

In conclusion, the absence of teeth in the upper jaw leads to a continuous bone resorption and, in the long term, it may not be possible to have an oral rehabilitation that allows the placement of implants. However, as shown, there are currently bone regeneration techniques that enable a satisfactory oral rehabilitation of (partial or total) edentulous patients, including the sinus floor elevation. This surgery allows the placement of implants in the upper posterior jaw overcoming the inherent difficulties of access to the site due to its angulation. The maxillary sinus lifting by atraumatic Summers technique has become more common due to the ease of application and reliability it represents to dentistry clinics. The corresponding phenomenon represents a credible base that supports the exploration and perfectioning of the technique, therefore, in recent years the specialty of Implantology - as a result of the technological, scientific and laboratory development - has often suffered changes and innovations.

For these reasons, dental implants represent a current hot topic, which requires a deep knowledge acquisition so that the intervention is carried out in a successful manner. Although one can often find, in the literature, reports of successful clinical cases with implants, the relationship between bone graft and the atraumatic sinus lifting technique, using surgical instruments, still has room for improvement.

No document has been detected either as a patent or from any other source that refers to the technical solution presented in this patent application in relation to the variable angulation of the active tips. However, we have detected some documents that refer to instruments whose components can be separated. This is the case of the documents:
- KR20130013772 which describes an instrument for lifting the maxillary sinus membrane, and which comprises a handle and a body that is installed perpendicularly thereto. The body has a fold in order to facilitate the operation.
- WO2010146573 refers to a tool that allows the placement of tips in a stem in a 90° angle.
- WO2008125449 which describes an instrument whose components can be separated.
- US2007293871 which presents an instrument composed by a stem and tips, where the tips have several projections for the fitting of the stem.

### Advantages of the Invention

Ergonomically and technically, the new surgical instrument translates into added value when referred to the need of placing parallel implants in the most remote areas of the jaw and, at the same time, using the atraumatic sinus lifting technique. Indeed, the device proposed herein promotes the angulation of the movements of the active tip of up to 180 degrees, which translates into an advantage in cases where the area to be remediated is almost inaccessible and an advantage in the cases where the mouth opening renders inaccessible the surgical access through the already existing instruments and *osteotomes of Summers*. At the same time this instrument will allow a reduction of the clinical period in the technical implementation of the atraumatic sinus lifting.

The proposed instrument, both for its ergonomics as its mobility in terms of articulation, allows the setting of the active tip of the instrument in the desired anatomical angulation. The simultaneous transport of the osteoinductive / conductor biomaterials facilitates both the lifting of the sinus lift with the implant placement, by compacting and condensing of the cancellous bone of the upper jaw in the retro molar zone.

The surgical instruments currently existing on the market in the context mentioned above are fixed, not allowing any angular variation, which during the surgery often makes it difficult to access restricted areas. With the development of the variable angulation tool and its active tips, this situation shall be overcome, being also possible to place implants in recessed areas respecting the parallelism of the insertion and also ensuring the atraumatic elevation of the maxillary sinus, the expansion of alveolar ridge and the adequate preparation of the implanting bed and the deposition of bone substitute particles.

For these reasons, the surgical instrument of variable angulation to be protected has clear advantages over existing instruments.

### Set of advantages / innovations:

- Reduction of the number of parts / tools to be applied during surgery;
- Increase the flexibility and angulation achieved, which allows the use in various directions (of up to 180°);
- Greater flexibility on use in patients with limited mouth opening or in situations where access to the surgical field is compromised;
- Performance and operative time optimization;
- Application of several active tips according to the circumstances.

### Brief description of drawings

These and other features can be readily understood by reference to the accompanying drawings, which should be regarded as examples only and do not in any way as restricting the scope of the invention. In the drawings, for illustrative purposes, the measurements of some of the elements may be exaggerated and not drawn to scale. The dimensions and the relative dimensions do not correspond to actual ratios for carrying out the invention.
Figure 1 shows a perspective view of the instrument of the invention, components thereof being visible: the body (1), stem-brake (2) angulation head (3) and active tip (4).
Figure 2 shows an exploded view of the instrument of the invention, being visible its components: the body (1), stem-brake (2) and angulation head (3).

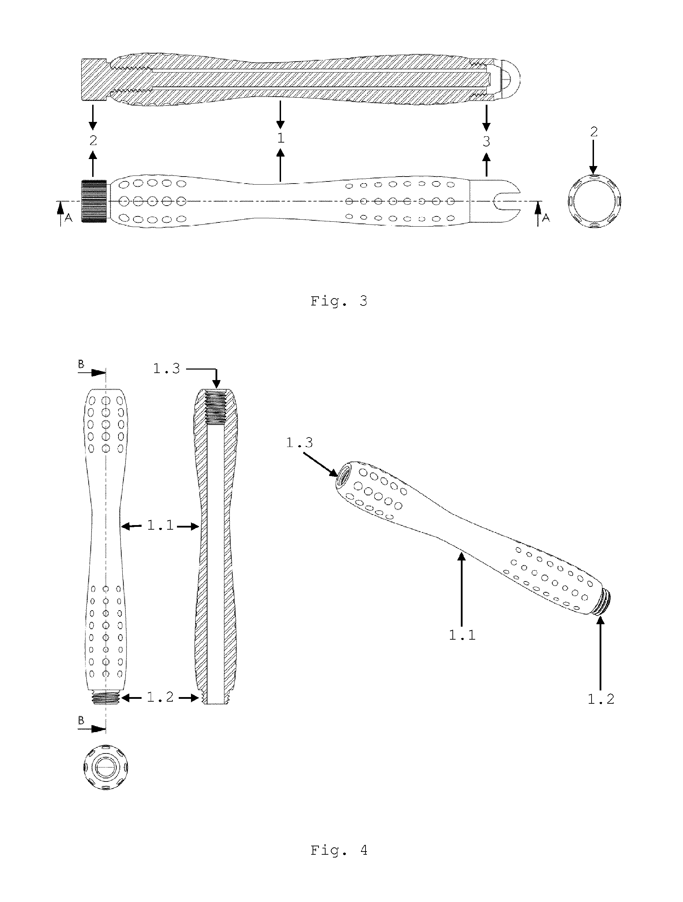

Figure 3 shows a top view, side view and side section of the instrument of the invention, being visible its components: the body (1), stem-brake (2) and angulation head (3).
Figure 4 shows a view in perspective, side view and sectional side view of the body (1) of the instrument of the invention, being visible its components: the tube (1.1), thread (1.2) for threading the angulation head (3) and thread (1.3) for threading the stem-brake grip (2).

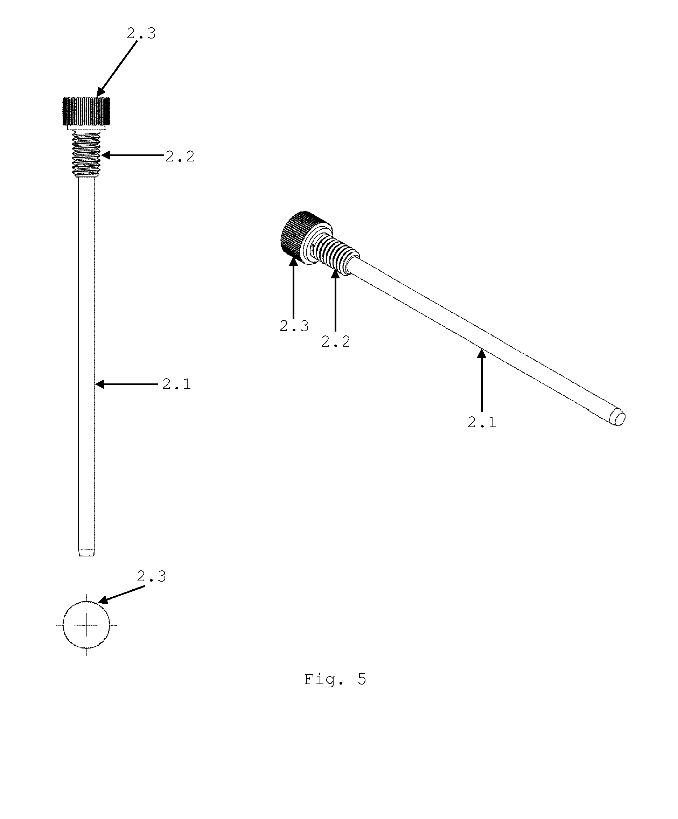

Figure 5 shows a view in perspective, side view and top view of the stem-brake (2) of the instrument of the invention, being visible its components: the body (2.1), thread (2.2) for threading the body (1) and the head (2.3).

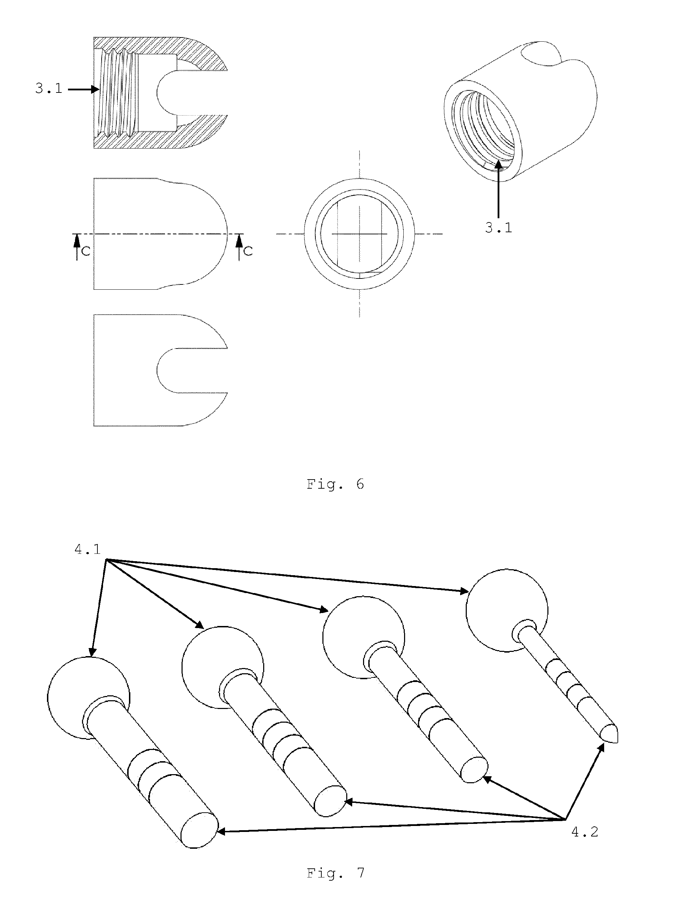

Figure 6 shows a perspective view, side view, sectional side view and top view of the angulation head (3) being visible the thread (3.1) for threading the body (1).
Figure 7 shows a perspective view of various embodiments of the active tips (4) consisting of the head (4.1) and the tip (4.2).

### Detailed description of the invention

The terms upper end, upper inner end, bottom end, outer bottom end, opposite edge, used in the description are intended for descriptive purposes only and not necessarily for describing relative positions. It should be noted that the terms are used interchangeably in appropriate circumstances and that the embodiments of the invention described herein are capable of operating in other orientations different from the ones described or illustrated herein. By substantially cylindrical, substantially perpendicular, substantially spherical and substantially rounded shapes, are intended the preferred ways of carrying out the invention, even though the same can operate with other shapes. The terms upper end, the upper inner end, bottom end, outer bottom end, opposite end, are the positions perceived by an observer placed in front of the instrument.

For osteotome set it is intended the whole assembly constituted by the body (1), stem-brake (2) and angulation head (3).

The present invention discloses a surgical instrument for dental medicine called osteotome with variable angulation of the active tip.

Given the proven effectiveness of the surgical procedure, the surgical instruments in clinical cases of oral rehabilitation with immediate placement of implants of this invention are used in *Summers* technical approach.

With the surgical instrument of variable angulation of the active tip (4) of the present invention, the mouth opening conditions, the placement of angulated implants, the use of anguled abutments, the use of micro-implants and or zygomatic implants are withdrawn in their entirety. Since by the present invention it is possible to access the area pre-molar and molar areas, it is possible by the angulation of the active tip (4) to place parallel implants.

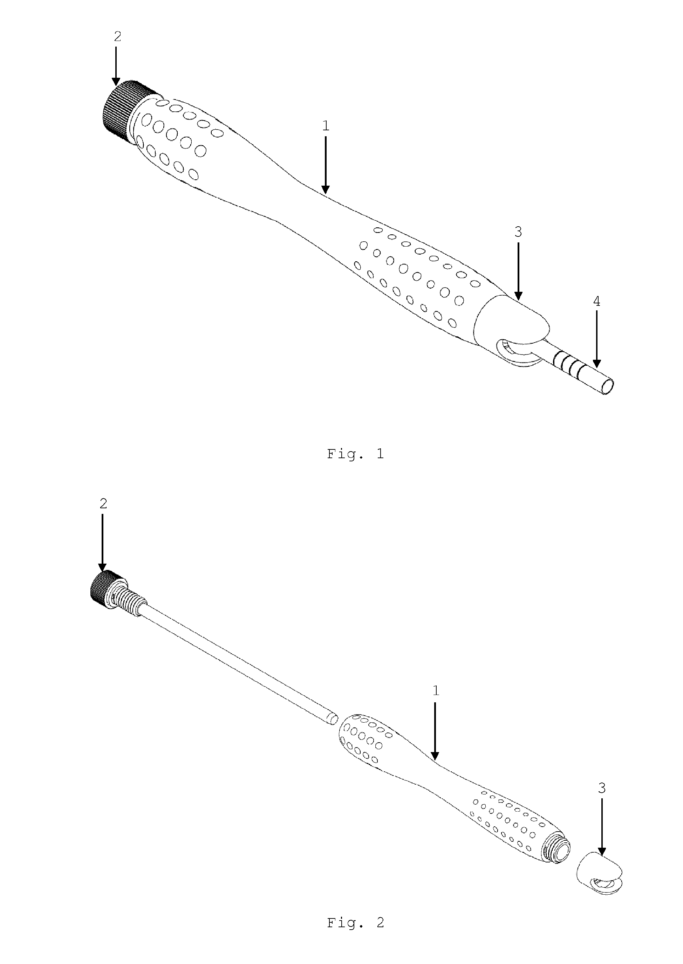

According to Figure 1 the instrument of the invention is constituted by the osteotome assembly formed by the body (1), stem-brake (2) and angulation head (3) and the active tip (4).

The body (1) of the instrument comprises a hollow tube (1.1) with a substantially cylindrical shape, one end supports the stem-brake (2) and at the opposite end the angulation head (3) ensures the hinged connection with the stem-brake (2) by means of an internal thread system (1.3), and at the opposite end with another thread system (1.2) that locks the angulation head (3) which allows the active tip (4) to be maintained stable when contacted, namely by the surgical hammer or by the hand during the procedure.

The stem-brake (2) goes internally through the component of the body (1) and has two functions: to impart the force that is applied by the surgical hammer or by the hand on the edge of the same and fix the position of the active tip (4) on the angulation head (3) required at the opposite end. It consists of a body (2.1) having a substantially cylindrical shape. Immediately below the head (2.3), a thread (2.2) allows the fastening in the thread (1.3) of the body (1).

The angulation head (3) is the component where the active tips (4) are placed, this component is connected to the body (1) by a thread (3.1), which will allow the moving of the active tip (4) until this one reaches the desired angle. The inside has a thread (3.1) for attaching to the thread (1.2) of the body (1). The lower end of the angulation head (3) has a substantially round shape, and the inner diameter of the lower end lower than the inner diameter of the remaining angulation of head (3) so that the head (4.1) of the active tip (4) is locked inside the angulation head (3). There are still two diametrically opposed projections at the lower end which allow the easier fixing of the active tip (4) when the desired angulation is of 90 degrees.

The active tip (4) consists of the head (4.1) and the tip (4.2) the corresponding function is to perform the s surgical procedures inside the mouth. The head (4.1) has a substantially spherical shape for fitting inside the angulation head (3).Due to this shape, the active tip (4) can move in any direction, this movement being limited only by the limits of the angulation head (3).

Some of the active tips (4) to be used in the instrument are tips already in current use in many osteotomes, namely:
- Tips for the elevation of the maxillary sinus;
- Intraoral mirror tip;
- Lateral action spatula tip;
- Periodontal curette tip;
- Circular scalpel tip.

And provided the substantially spherical shape of the head (4.1) is maintained, any active tip (4) may be coupled to the tool presenting the format required by the operator.

### Method of operation

The stem-brake (2) is inserted inside the body (1) and fixed to it through the thread (1.3) and the thread (2.2).The active tip (4) to be used is introduced into the angulation head (3) being positioned so that the tip (4.2) exits from the lower end of the angulation head (3). The angulation head (3) is then fixed to the body (1) by the thread (1.2) and the thread (3.1). It is then chosen by the operator the ideal position of the active tip (4) for the surgical procedure to be performed. After selecting the position of the active tip (4), the same is locked by rotating the stem-brake (2). When moving to the stem-brake (2), the lower end of the body (2.1) exerts pressure on the head (4.1) of the active tip (4) blocking any kind of movement.

### Bibliographic references

- A Branemark PI, Adell R, Breine U, Hansson BO, Lindstrom J, Ohlsson A. Intra-osseous anchorage of dental prostheses. I. Experimental studies. Scand J Plast Reconstr Surg 1969; 3:81-100
- Wittaker J, James R, Lozada J. Histological responses and clinical evaluation of heterograft and allograft material in the elevation of maxillary sinus for the preparation of endosteal dental implant sites. Simultaneous sinus elevation and root form implantation: An eight month autopsy report. J Oral Implantol 1989; 15:141.
- Brock V. Rosenlicht JL. Sinus lift as a means of improving restorative options in the edentulous maxilla: Case report. J J Dent Assoc 1993; 64: 23-27.
- Linkow, R. Chercheve, R.: Theory and Tecnhiques of Oral Implantology. Mosby, St. Louis, 1970; pp. 1-154.
- Cawood JI, Howell RA. Reconstrutive preprosthetic surgery. I. Anatomical considerations. Int J Oral Maxillofac Surg 1991; 20:75.
- Lekholm U, Zarb GA. Patiente selection. In: Bränemark P-I, Zarb GA, Albrektson T (eds). Tissue-Integrated Prostheses: Osseointegration in Clinical Dentistry. Chicago: Quintessence, 1985:199-209.
- Albrektsson, T., Brånemark, P.-I., Hansson, H.-A., and Lindström, J. Osseointegrated titanium implants. Requirements for ensuring a long-lasting direct bone-to-implant anchorage in man. Acta Orthop Scand 52:155-170, 1981.
- Albrektsson T, Zarb G, Worthington P, Eriksson AR. The long-term efficacy of currently used dental implants: a review and proposed criteria of success. Int J Oral Maxillofac Implants. 1986 Summer; 1(1):11-25
- Sutter, F.; Schroeder, A.; Buser, D.A. The new conceptof ITI hollow-cylinder and hollow-screw implants: Part 1. Engineeringand design. Int J Oral Maxillofac Surg 1988; 3: 161-172.
- Tatum, O.H., Maxilary and sinus reconstruction. Dental Clin. North. Amer.v.30, p.207-229, 1986
- Summers, R. B., A new concept in maxillary implant surgery: the osteotome technique. Compend. Contin. Educ. Dent. v. 15, p. 152-8, 1994.
- Summers R. B., The osteotome technique: Part 3-Less invasive methods of elevating thesinus floor. Compendium. 1994b Jun; 15(6):698, 700, 2-4 passim; quiz 10.
- Summers R.B., The osteotome technique: Part 2-The ridge expansion osteotomy (REO) procedure. Compendium. 1994c Apr; 15(4):422, 4, 6, passim; quiz 36
- Summers R.B., Conservative osteotomy technique with simultaneous implant insertion.Dent Implantol Update. 1996a Jul; 7(7):49-53.
- Emmerich D, Att W, Stappert C. Sinus floor elevation using osteotomes: a systematic review and meta-analysis. J Periodontol. 2005; 76(8):1237-1251.
- Ferrigno N, Laureti M, Fanali S (2006). Dental implants placement in conjunction with osteotome sinus floor elevation: a 12-year life-table analysis from a prospective study on 588 ITI implants. [Erratum appears in Clin Oral Implants Res. 2006 Aug; 17(4):479]. Clinical Oral Implants Research 17(2):194-205.
- Fred. F. Farhat, DDS, MSD; Bassam Kinaia, DDS, MSD; Howard B. Gross, DDS, MSD. Sinus Bone Augmentation: A Review of the Common Techniques. Parkell Online Learning Center
- Summers R.B., The osteotome technique: Part 4-Future site development. CompendContin Educ Dent. 1995 Nov;16(11):1090, 2 passim; 4-6, 8, quiz 9.

## Claims

1. Osteotome assembly for dentistry **characterized in that** it consists of a body (1), a stem-brake (2) and an angulation head (3).

2. Osteotome assembly according to the preceding claim **characterized in that** the body (1) is constituted by a tube (1.1) at the lower end of which there is a thread (1.2) for fixing the angulation head (3) and whose upper end has a thread (1.3) for fixing the stem-brake (2).

3. Osteotome assembly according to claim 1, **characterized in that** the stem-brake (2) is constituted by a body (2.1) having a substantially cylindrical shape at the upper end of which there is a head (2.3) and below the head (2.3) there is a thread (2.2) for attaching to the body (1).

4. Osteotome assembly according to claim 1 **characterized in that** the lower end of the angulation head (3) has a substantially rounded shape, being the inner diameter smaller than the inner diameter of the remaining of the angulation head (3).

5. Osteotome assembly according to the preceding claims **characterized in that** the attachment between the body (1) and the stem-brake (2) is effected by means of the thread (1.3) of the body (1) and the thread (2.2) of the stem-brake (2).

6. Osteotome assembly according to the preceding claims **characterized in that** the attachment between the body (1) and angulation head (3) is effected by means of the thread (1.2) of the body (1) and the thread (3.1) of the angulation head (3).

7. Active tip (4) of osteotome for dentistry **characterized in that** it is constituted by head (4.1) and tip (4.2).

8. Active tip (4) according to claim 7 **characterized in that** the head (4.1) has a substantially spherical shape.

9. Active tip (4) according to claims 7 and 8 **characterized in that** the head (4.1) fits into the angulation head (3).

10. Active tip (4) according to claims 7 to 9 **characterized in that** the active tip (4) can move in any direction within the angulation head (3), this movement being limited solely by the lower end of the angulation head (3).

11. Osteotome for dentistry with variable angulation of the active tip **characterized in that** is being constituted by a osteotome assembly according to claims 1 to 6 and by an active tip (4) according to claims 7 to 10.

12. Method of operating the osteotome as claimed in claim 11, **characterized in that** it comprises the following steps:
a) the stem-brake (2) is inserted inside the body (1) and fixed to it through the thread (1.3) and the thread (2.2);
b) the active tip (4) is introduced into the angulation head (3) being positioned so that the tip (4.2) exits from the lower end of the angulation head (3);
c) the angulation head (3) is fixed to the body (1) by the thread (1.2) and the thread (3.1);
d) the ideal position of the active tip (4) is selected by the operator for the surgical procedure to be performed;
e) after the selection of the position of the active tip (4), this is locked by rotating the stem-brake (2) by pressure exerted on the head (4.1) at the lower end of the body (2.1).
